# EUROPÄISCHE PATENTSCHRIFT

(11) **EP 2 948 687 B1**
(45) Veröffentlichungstag und Bekanntmachung des Hinweises auf die Patenterteilung: **15.03.2017**
(21) Anmeldenummer: 14702467.3
(22) Anmeldetag: 20.01.2014
(51) Int. Cl.: F16B 37/12, H01M 2/28, F16B 33/02

(54) **GEWINDEAUSBILDUNG**
THREADED FORMATION
FILETAGE

(30) Priorität: 25.01.2013 DE 102013100747
(43) Veröffentlichungstag der Anmeldung: 02.12.2015
(73) Patentinhaber: Hagemann-Systems GmbH, 42349 Wuppertal (DE)
(72) Erfinder: TRIMBORN, Jens, 42349 Wuppertal (DE)
(74) Vertreter: Müller, Enno
(86) Internationale Anmeldenummer: PCT/EP2014/050976
(87) Internationale Veröffentlichungsnummer: WO 2014/114576

(56) Entgegenhaltungen:
- DE-U1-202006 012 713
- US-A- 2 672 070
- US-A- 4 377 197
- US-A1- 2012 100 420

## Beschreibung

Die Erfindung betrifft eine Gewindeausbildung nach den Merkmalen des Oberbegriffes des Anspruches 1.

Derartige Gewindeausbildungen sind bereits in verschiedener Hinsicht bekannt geworden. Es wird beispielsweise auf die US-A-2672070 und die WO-A1-2011/038939 verwiesen.

Aus der genannten US-Schrift ist es bekannt, die Drahtwendel in den aufeinander liegenden Bereichen konvex-/konkav auszubilden, um so einen regelmäßigen breiten Streifen zu erreichen, in welchem einzelne Wicklungen der Drahtwendel aufeinander liegen. Es soll erreicht werden, dass beim Umspritzen der Drahtwendel möglichst kein Material, vornehmlich soll mit Kunststoffmaterial umgossen werden, in das Innere der Drahtwendel eindringt.

Aus der DE 20 2006012713 U1 ist eine gattungsgemäße Drahtwendel zur Ausbildung einer Gewindeausbildung bekannt, bei welcher in Erstreckungsrichtung der Mittelachse der Drahtwendel eine Formschluss-Zusammenwirkung zwischen den Windungen gegeben ist. Die Drahtwendel muss entsprechend zunächst mit Abstand gewendelt werden und dann in axialer Richtung ineinandergedrückt werden.

Aus der US 4,377,197 A ist ein Batterieanschluss bekannt, bei welchem eine Mutter als Einlegeteil von dem Elektrodenmaterial umgossen wird.

Ausgehend von dem genannten Stand der Technik stellt sich der Erfindung hinsichtlich einer Gewindeausbildung aus einer Drahtwendel die Aufgabe, eine insbesondere fertigungstechnisch günstige Ausgestaltung anzugeben.

Diese Aufgabe ist beim Gegenstand des Anspruches 1 gelöst, wobei darauf abgestellt ist, dass der Draht in einem Querschnitt in der Erstreckungsrichtung der Mittelachse der Drahtwendel auf einer ersten Seite eine sich quer zu der Erstreckungsrichtung öffnende Eingreifausnehmung, vorzugsweise mit einem Hinterschnitt, aufweist und auf der gegenüberliegenden zweiten Seite einen an die Ausnehmung angepassten Eingreifvorsprung.

Insbesondere dann, wenn der Vorsprung durch eine seitliche Verlagerung, bezogen auf die Erstreckungsrichtung, eines Drahtes in den Hinterschnitt eingelegt werden kann, ist es auch nicht erforderlich, dass sich eine Klemmwirkung ergibt. Andererseits kann auch eine Ausgestaltung vorgesehen sein, bei welcher die Ausnehmung bzw. der Vorsprung derart geformt sind, dass der Draht durch Ineinanderdrücken von zugeordnete erste und zweite Seite aufweisender Drahtabschnitte in oder quer zu der Erstreckungsrichtung fügbar ist. Hierbei kann eine Einclipshalterung beispielsweise gegeben sein. Eine elastische Verformbarkeit des Drahtwerkstoffes kann für eine solche Rastverbindung ausgenutzt sein.

Der Draht selbst kann aus unterschiedlichen Materialien bestehen. Im Hinblick auf eine Anwendung bei einer Batterie, vorzugsweise aus einem elektrisch gut leitfähigen Material, beispielsweise auch einer metallischen Legierung. Ansonsten kann der Draht beispielsweise auch aus Stahl bestehen.

Weiter ist bevorzugt, dass der Draht in einem Querschnitt eine dritte und eine vierte Seite aufweist, die sich im Wesentlichen rechtwinklig zu der genannten Erstreckungsrichtung der Drahtwendel erstrecken. Die dritte Seite kann einen zur Ausbildung eines Gewindegangs geeignete Gewindegangkontur aufweisen. Im Falle der Ausbildung einer Mutter ist diese dritte Seite innenliegend bezüglich der Drahtwendel gegeben. Im Falle der Ausbildung eines Gewindezapfens ist entsprechend diese dritte Seite außenseitig in der Drahtwendel gegeben.

Die Gewindegangkontur kann im Einzelnen einen spitzen Winkel miteinander einschließend gerade Konturlinien aufweisen. Andererseits ist ersichtlich, dass hier auch eine Anpassung an sonstige Gewindeformen, etwa auch ein Trapezgewinde, vorgesehen sein kann.

In dem Querschnitt ist weiter bevorzugt eine Konturlinie der vierten Seite länger, als es einer freiliegenden Höhe eines Drahtabschnittes in der Drahtwendel entspricht. Hierdurch kann erreicht werden, dass die vierte Seite eine vergleichsweise große Oberfläche ausbildet. Da die vierte Seite bevorzugt im Einbauzustand von einem Material, insbesondere Metall, umgossen ist, ergibt sich so eine große Fläche, in welcher eine Verhaftung mit dem umgossenen Metall gegeben ist.

Insbesondere kann die Konturlinie der vierten Seite gleich lang oder länger sein als die Konturlinie der dritten Seite.

Weiter ist bevorzugt, dass der Draht von einem Metall umgossen ist, das zur Bildung einer Elektrode oder eines Batteriepols verwendbar ist. Hierzu bieten sich beispielsweise Blei, Zink, Kupfer oder eine Legierung aus Nickel und Cadmium, aber auch weitere Metalle oder Legierungen an.

Ein Batteriepol ist in der Regel dazu vorgesehen, mehrere Elektroden miteinander zu verbinden. Erfindungsgemäß ist insofern mit einer Batterieelektrode oder einem Batteriepol unmittelbar kombiniert. Durch Gießen der Batterieelektrode und/ oder des Batteriepols und gleichzeitigem Umgießen oder Ausgießen (etwa im Falle eines Gewindezapfens) der Drahtwendel, welche die Gewindeausformung ergibt, lässt sich die Batterieelektrode oder der Batteriepol zum unmittelbaren Anschluss eines Batterieverbinders oder eines Kabelschuhs günstig herstellen. Dadurch, dass die Gewindeausformung durch den Draht vorgenommen wird, kann hier ein anderes, insbesondere härteres und/ oder leitfähigeres Metall als es für die Batterieelektrode oder den Batteriepol als solches verwendet wird, eingesetzt werden. Andererseits ist durch das Umgießen das Elektrodenmaterial bis unmittelbar an die Gewindeausformung herangeführt. Es ist ein guter elektrischer Übergang erreichbar.

Es ist bevorzugt, dass der Draht in einem Querschnitt in der Erstreckungsrichtung der Drahtwendel auf einer ersten Seite eine sich quer zu oder in der Erstreckungsrichtung öffnende Ausnehmung mit einem Hinterschnitt aufweist und auf der gegenüberliegenden zweiten Seite einen an die Ausnehmung angepassten Vorsprung. Hierbei ist es allerdings nicht erforderlich, dass der Vorsprung den Hinterschnitt jeweils vollständig ausfüllt, wenn dies auch bevorzugt ist.

Nachstehend ist die Erfindung des weiteren anhand der beigefügten Zeichnung, die jedoch lediglich Ausführungsbeispiele darstellt, beschrieben. Hierbei zeigt:
- Fig. 1: eine mit Gewinde versehene Öffnung in einem Bauteil, gebildet durch einen das Gewinde bildenden Draht;
- Fig. 2: einen Gewindezapfen an einem Bauteil, mit einem durch einen Draht gebildeten Gewinde;
- Fig. 3: eine Ausschnittsvergrößerung aus Fig.1 bezüglich des Drahtes;
- Fig. 4: eine Darstellung des Drahtes vor einer Formung zu einer Drahtwendel;
- Fig. 5: eine weitere Querschnittsform des Drahtes gemäß Fig. 3 bzw. Fig. 4 (nicht Gegenstand der Erfindung);
- Fig. 6: eine weitere Querschnittsform des Drahtes gemäß Fig. 3 bzw. Fig. 4;
- Fig. 7: eine schematische Darstellung einer Batterieelektrode mit einem Gewindezapfen mit Gewinde gebildet durch eine Drahtwendel;
- Fig. 8: eine schematische Darstellung einer Batterieelektrode mit einer Gewindeöffnung, mit durch eine Drahtwendel gebildetem Gewinde; und
- Fig. 9: eine schematische Querschnittsdarstellung von durch einen Batteriepol verbundenen Elektrodenplatten.

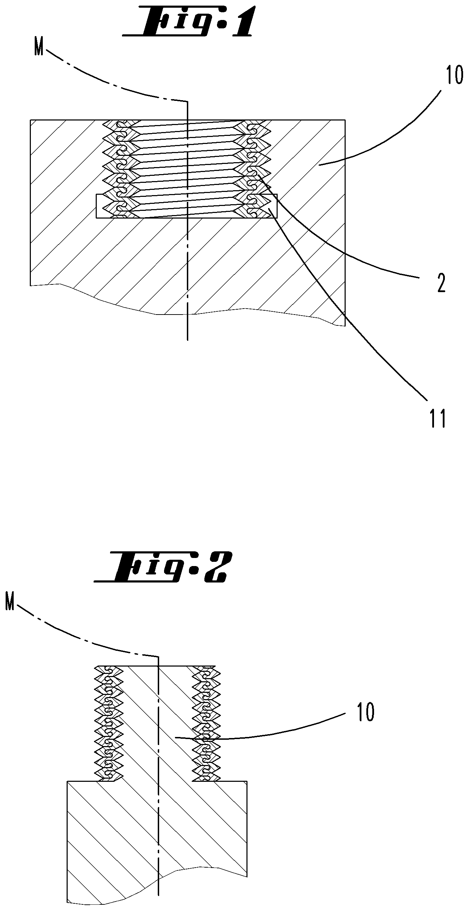

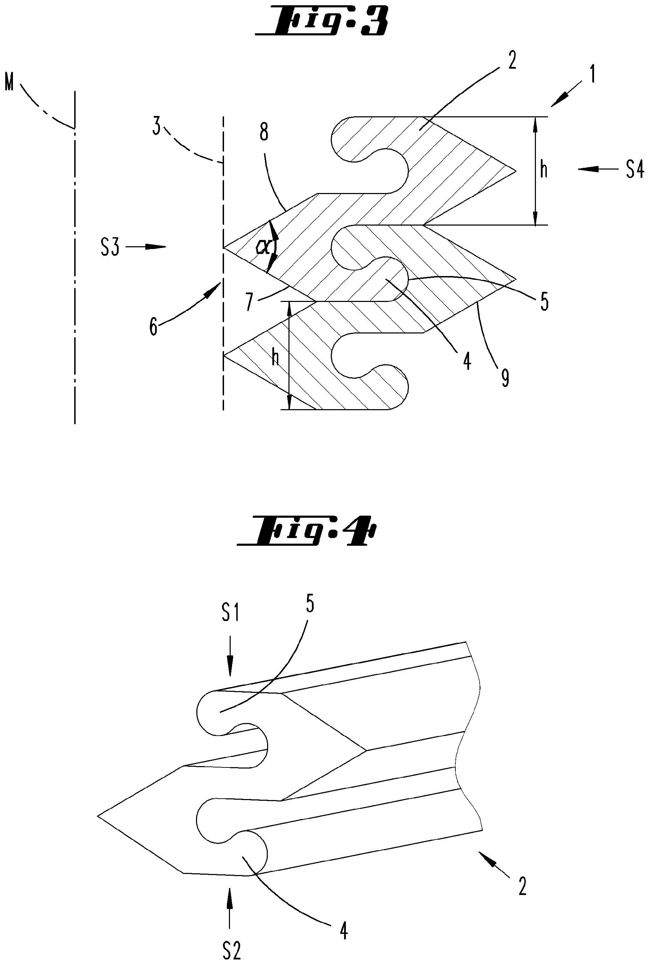

Dargestellt und beschrieben ist zunächst prinzipiell, mit Bezug zu den Figuren 3 bis 6, in einer Anwendung gemäß beispielsweise Figur 1 oder Figur 2, eine Gewindeausbildung 1 in Form einer Drahtwendel, die in einer Richtung der Mittelachse M aus formschlüssig an sich selbst gehaltertem Draht 2 besteht.

Der Draht 2 ist ausgehend von einer langgestreckten Form gemäß Figur 4 zu einer Drahtwendel, die bevorzugt innen einen gedachten Zylinder 3 begrenzt, aufgewickelt.

Der Draht 2 weist hierbei, bezogen auf einen Querschnitt, wie er in den Figuren 3 bis 6 ersichtlich ist, sowohl einen Eingreifvorsprung 4 wie auch eine Eingreifausnehmung 5 auf. Im gewendelten Zustand gemäß Figur 3 ist der Eingreifvorsprung 4 jeweils in eine Eingreifausnehmung 5 eingefahren oder eingedrückt, so dass sich in Richtung der genannten Mittelachse M der angesprochene Formschluss ergibt.

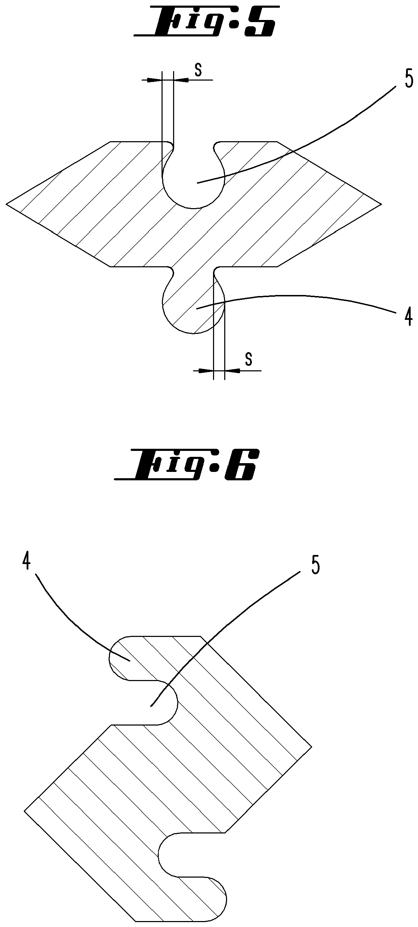

Bei der Ausführungsform der Figuren 3 und 4 öffnet die Eingreifausnehmung 5 bezüglich des Zylinders 3 nach zentral innen. Sie kann auch nach außen öffnend ausgebildet sein. Bei der Ausführungsform der Figur 6 sind insofern gleiche Verhältnisse gegeben.

Bei dem Beispiel der Figur 5 öffnet die Eingreifausnehmung 5 bezogen auf die Wendelanordnung gemäß Figur 3 in Richtung der Mittelachse M und erstreckt sich entsprechend auch der Eingreifvorsprung 4 in dieser Richtung. Hier ist ein Hinterschnitt s bezüglich der Eingreifausnehmung 5 beziehungsweise des Eingreifvorsprunges 4 ausgebildet, der im zusammengesetzten Zustand für den gewünschten Formschluss in Richtung der Mittelachse M sorgt.

Der erfindungsgemäße Draht 2 weist entsprechend auf einer Seite S₁, die etwa in einer Draufsicht gegeben ist, eine sich quer zu der Mittelachse M öffnende Eingreifausnehmung 5 auf und einen auf der gegenüberliegenden Seite S₂ hieran angepassten Eingreifvorsprung 4, gegebenenfalls mit oder ohne Hinterschnitt.

Die Eingreifausnehmung 5 bzw. der Eingreifvorsprung 4 sind derart geformt, dass der Draht durch Ineinanderdrücken von zugeordnete erste und zweite Seite S₁ bzw. S₂ aufweisenden Drahtabschnitten quer zu der Erstreckungsrichtung fügbar ist. Soweit ein Hinterschnitt vorgesehen ist, ist entsprechend bevorzugt, dass es im Rahmen der Fügung nur zu einer elastischen Aufweitung der Eingreifausnehmung 5 bzw. einer elastischen Einschnürung des Eingreifvorsprunges 4 kommt.

Der Draht 2 weist weiter bezogen auf den genannten Querschnitt eine dritte und vierte Seite S₃ bzw. S₄ auf, vergleiche Figur 3. Diese Seiten erstrecken sich bezogen auf die Querschnittsansicht im Wesentlichen in Richtung der Erstreckungsrichtung der Drahtwendel bzw. konkret der Mittelachse M.

Die Seite S₃ weist hierbei eine zur Ausbildung des gewünschten Gewindegangs geeignete Gewindegangkontur 6 auf.

Bei den dargestellten Ausführungsbeispielen ist immer eine selbe Gewindegangkontur 6 gegeben. Sie kann aber auch hiervon abweichend sein, unabhängig davon, welches Ausführungsbeispiel betroffen ist.

Die konkret dargestellte Gewindegangkontur 6 weist zwei gerade Konturlinien 7, 8 auf, die miteinander einen spitzen Winkel α einschließen.

Von Besonderheit ist, dass eine Konturlinie 9 der Seite S₄, die bei den Ausführungsbeispielen jeweils geometrisch gleich zu den Konturlinien 7, 8 gebildet ist, aber auch hiervon unterschiedlich sein kann, jedenfalls länger ist, als es einer freiliegenden Höhe h des Drahtabschnittes in der Drahtwendel entspricht. Die freiliegende Höhe h entspricht bei der Ausführungsform derjenigen Höhe, die im vergossenen Zustand außen- bzw. innenseitig von dem Gießmaterial umgeben ist. Bei den dargestellten Ausführungsbeispielen ist die Konturlinie 9 (die hierbei nicht in einzelne Abschnitte aufgeteilt angesprochen ist) jeweils gleich der Gewindekontur 6 (Konturlinien 7 und 8 zusammengefasst).

Der Draht 2 besteht aus einem metallischen Werkstoff. Er kann beispielsweise aus Stahl, Kupfer, Aluminium oder eine metallischen Legierung bestehen.

In der Anwendung, wie sie beispielsweise in den Figuren 1 und 2 dargestellt ist, ist der Draht 2 bzw. die hieraus gebildete Drahtwendel von einem Metall 10 umschlossen, Figur 1, bzw. ausgefüllt, Figur 2, wobei das Metall 10 durch Gießen die Wendel umschließt bzw. ausfüllt. Das Metall 10 ist insbesondere und bevorzugt ein Metall, wie es auch zur Ausbildung einer Elektrode einer Batterie Verwendung findet. Also beispielsweise Blei, Zink, Kupfer oder eine Legierung, wie beispielsweise eine Legierung aus Nickel und Cadmium. In einer anderen Anwendung kann es sich aber auch beispielsweise um Kunststoff oder Gusseisen handeln.

Bei der Ausführungsform der Figur 1 ist ersichtlich zusätzlich vorgesehen, dass im Fußbereich der Drahtwendel ein hier topfartiges Teil 11 vorgesehen ist, das bei dem Vergießen verhindert, dass Metall in das Innere der Gewindeausformung eindringt.

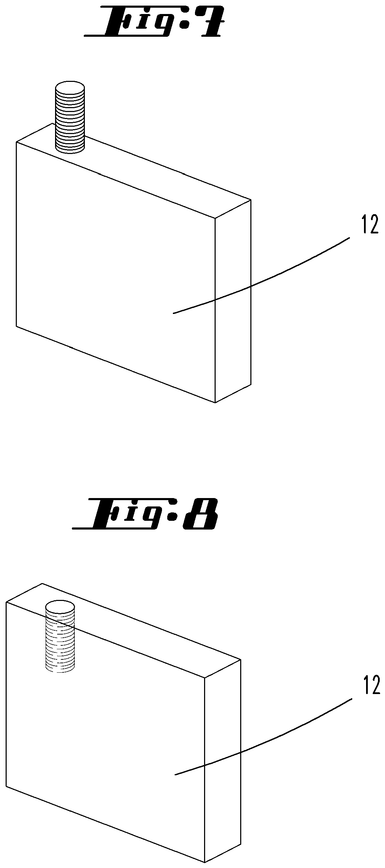

Mit Bezug zu den Figuren 7 und 8 sind Batterieelektroden 12 dargestellt, in welche fertigungstechnisch integriert, nämlich durch Umgießen oder Ausgießen integriert, Drahtwendel aufgenommen sind zur Ausbildung entsprechender Gewindezapfen oder Gewindeausnehmungen, wie sie prinzipiell den Figuren 1 und 2 entsprechen. Bezüglich einer bevorzugt plattenartig gebildeten Elektrode ist der Gewindezapfen oder die Gewindeausnehmung auf einer Schmalseite der Elektrode ausgebildet.

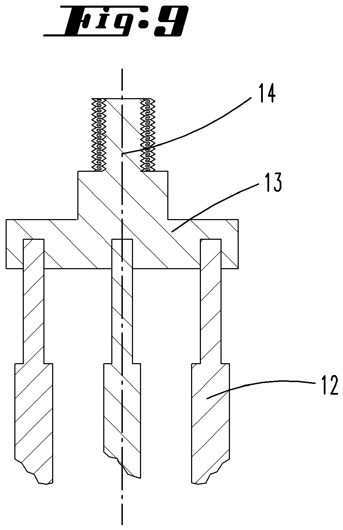

Figur 9 zeigt einen Querschnitt durch eine Anzahl von plattenförmigen Batterieelektroden 12, die durch einen Batteriepol 13 miteinander verbunden sind. Der Batteriepol ist üblicherweise ein starres, metallisches Teil. Er kann einen Kern aus einem gut leitfähigen Material, auch einem Elektrodenmaterial, wie beispielsweise Kupfer, aufweisen, er kann auch eine Umhüllung aus einem zum Schutz gegen Elektrolyten vorgesehen Material, beispielsweise aus Blei, aufweisen.

Der Batteriepol weist beim Ausführungsbeispiel zum Anschluss beispielsweise eines Kabelschuhs einen Gewindezapfen 14 auf. Es kann sich auch, was im Einzelnen nicht dargestellt ist, um eine Öffnung in dem Batteriepol 13 mit Innengewinde handeln, etwa zum Eindrehen einer Verbindungsschraube. Das Gewinde des Gewindezapfens 14 bzw. der Gewindezapfen 14 insgesamt oder die nicht dargestellte mit Innengewinde versehene Öffnung ist entsprechend einem oder mehreren der vorstehend erläuterten Merkmale ausgebildet und hergestellt.

## Patentansprüche

1. Gewindeausbildung (1) aus einem in Form einer Drahtwendel, die eine Erstreckungsrichtung entsprechend einer Mittelachse (M) aufweist, verlaufenden Draht (2) gebildeten Mutter oder Schraube, ggf. in Form einer Gewindeöffnung in oder eines Gewindezapfens an einem Bauteil, wobei der Draht (2) in der Erstreckungsrichtung der Mittelachse (M) der Drahtwendel formschlüssig an sich selbst gehaltert ist, **dadurch gekennzeichnet, dass** der Draht (2) in einem Querschnitt in der Erstreckungsrichtung der Mittelachse der Drahtwendel auf einer ersten Seite (S₁) eine sich quer zu der Erstreckungsrichtung öffnende Eingreifausnehmung (5), vorzugsweise mit einem Hinterschnitt (s), aufweist und auf der gegenüberliegenden zweiten Seite (S₂) einen an die Ausnehmung (5) angepassten Eingreifvorsprung (4).

2. Gewindeausbildung (1) nach Anspruch 1, **dadurch gekennzeichnet, dass**
die Eingreifausnehmung (5) bzw. der Eingreifvorsprung (4) derart geformt sind, dass der Draht (2) durch Ineinanderdrücken von zugeordnete erste und zweite Seite (S₁, S₂) aufweisender Drahtabschnitte quer zu der Erstreckungsrichtung fügbar ist.

3. Gewindeausbildung (1) nach einem der vorangehenden Ansprüche,
**dadurch gekennzeichnet, dass** der Draht (2) in einem Querschnitt weiter eine dritte und eine vierte Seite (S₃, S₄) aufweist, die sich im Wesentlichen in der Erstreckungsrichtung der Drahtwendel erstrecken, von denen jedenfalls die dritte Seite (S₃) eine zur Ausbildung eines Gewindegangs geeignete Gewindegangkontur (6) aufweist.

4. Gewindeausbildung (1) nach Anspruch 3, **dadurch gekennzeichnet, dass**
die Gewindegangkontur (6) miteinander einen spitzen Winkel einschließende gerade Konturlinien aufweist.

5. Gewindeausbildung (1) nach einem der Ansprüche 3 oder 4, **dadurch gekennzeichnet, dass** in dem Querschnitt eine Konturlinie der vierten Seite (S₄) länger ist, als es einer freiliegenden Höhe (h) eines Drahtabschnittes in der Drahtwendel entspricht.

6. Gewindeausbildung (1) nach einem der Ansprüche 3 bis 5, **dadurch gekennzeichnet, dass** die Konturlinie der vierten Seite (S₄) gleich lang oder länger ist als die Konturlinie der dritten Seite (S₃).

7. Gewindeausbildung (1) nach einem der vorangehenden Ansprüche,
**dadurch gekennzeichnet, dass** das der Draht (2) aus einem metallischen Werkstoff besteht, beispielsweise aus Stahl, Kupfer, Aluminium und/oder einer metallischen Legierung.

8. Gewindeausbildung (1) nach einem der vorangehenden Ansprüche,
**dadurch gekennzeichnet, dass** der Draht (2) von einem Metall (10) umgossen ist, das zur Bildung einer Elektrode verwendbar ist wie bspw. Blei, Zink, Kupfer oder eine Legierung aus Nickel und Cadmium.

## Claims

1. Threaded formation (1) consisting of a wire which extends in the form of a wire helix that has an extension direction that corresponds to a centre axis (M), formed as nut or screw, optionally in the form of a threaded opening in a component or of a threaded stem on a component, the wire (2) being mounted so as to interlock with itself in the extension direction of the centre axis (M) of the wire helix, **characterised in that**, in a cross section in the extension direction of the centre axis of the wire helix, the wire (2) comprises, on a first side (S₁), an engagement recess (5), preferably having an undercut (s), which opens transversely to the extension direction, and comprises, on the opposite second side (S₂), an engagement protrusion (4) that is adapted to the recess (5).

2. Threaded formation (1) according to claim 1, **characterised in that** the engagement recess (5) or the engagement protrusion (4) is formed in such a way that the wire (2) can be joined by pushing wire portions having associated first and second sides (S₁, S₂) into one another transversely to the extension direction.

3. Threaded formation (1) according to any of the preceding claims, **characterised in that** the wire (2) further comprises, in a cross section, third and fourth sides (S₃, S₄) that extend substantially in the extension direction of the wire helix, of which the third side (S₃) has a thread contour (6) that is suitable for forming a thread.

4. Threaded formation (1) according to claim 3, **characterised in that** the thread contour (6) has straight contour lines that are at an acute angle to one another.

5. Threaded formation (1) according to either claim 3 or claim 4, **characterised in that**, in the cross section, a contour line of the fourth side (S₄) is longer than an exposed height (h) of a wire portion in the wire helix to which said line corresponds.

6. Threaded formation (1) according to any of claims 3 to 5, **characterised in that** the contour line of the fourth side (S₄) is the same length as or longer than the contour line of the third side (S₃).

7. Threaded formation (1) according to any of the preceding claims, **characterised in that** the wire (2) consists of a metal material, such as steel, copper, aluminium and/or a metal alloy.

8. Threaded formation (1) according to any of the preceding claims, **characterised in that** the wire (2) is encapsulated by a metal (10), such as lead, zinc, copper or an alloy consisting of nickel and cadmium, which can be used to form an electrode.

## Revendications

1. Filetage (1) d'un écrou ou d'une vis formé par un fil (2) s'étendant sous la forme d'une hélice présentant une direction d'extension correspondant à un axe central (M), le cas échéant sous la forme d'un trou fileté ou d'un embout fileté d'une pièce, dans lequel le fil (2) se supporte lui-même dans la direction d'extension de l'axe centrale (M) de l'hélice par complémentarité de forme, **caractérisé en ce que** le fil (2) présente dans une section transversale dans la direction d'extension de l'axe central de l'hélice, un évidement d'engagement (5) sur un premier côté (S₁) lequel évidement d'engagement (5) s'ouvre transversalement à la direction d'extension, de préférence avec une contre-dépouille (s), et une saillie d'engagement (4) sur le deuxième côté opposé (S₂) laquelle est adaptée à l'évidement (5).

2. Filetage (1) selon la revendication 1,
**caractérisé en ce que** l'évidement d'engagement (5), respectivement la saillie d'engagement (4), sont formés de manière à ce que le fil (2) soit susceptible d'être assemblé par emboitement de sections de fil présentant des premier et deuxième côtés (S₁, S₂) associés, l'une dans l'autre par pression transversale à la direction d'extension.

3. Filetage (1) selon l'une des revendications précédentes, **caractérisé en ce que** dans une section transversale, le fil (2) présente en outre un troisième et un quatrième côté (S₃, S₄), lesquels s'étendent sensiblement dans la direction d'extension de l'hélice, et parmi lesquels au moins le troisième côté (S₃) présente un contour de filet (6) adapté à former un filet.

4. Filetage (1) selon la revendication 3,
**caractérisé en ce que** le contour de filet (6) présente des lignes de contour droites formant entre elles un angle aigu.

5. Filetage (1) selon l'une des revendications 3 ou 4, **caractérisé en ce que** dans la section transversale, une ligne de contour du quatrième côté (S₄) est plus longue qu'une hauteur libre (h) d'une section de fil correspondante dans l'hélice.

6. Filetage (1) selon l'une des revendications 3 à 5, **caractérisé en ce que** la ligne de contour du quatrième côté (S₄) a la même longueur ou une longueur supérieure à la ligne de contour du troisième côté (S₃).

7. Filetage (1) selon l'une des revendications précédentes, **caractérisé en ce que** le fil (2) est réalisé en un matériau métallique, par exemple de l'acier, du cuivre, de l'aluminium et/ou un alliage métallique.

8. Filetage (1) selon l'une des revendications précédentes, **caractérisé en ce que** le fil (2) est revêtu par un métal (10) qui est apte à être utilisé pour former une électrode tel que par exemple du plomb, du zinc, du cuivre ou un alliage de nickel et cadmium.
